Europäisches Patentamt

(19) European Patent Office

Office européen des brevets

(11) Numéro de publication : **0 124 672 B1**

# (12) FASCICULE DE BREVET EUROPÉEN

(45) Date de publication du fascicule du brevet :
**30.12.86**

(51) Int. Cl.⁴ : **A 01 M 21/04**

(21) Numéro de dépôt : **83400898.9**

(22) Date de dépôt : **04.05.83**

(54) Perfectionnement aux dispositifs de traitement de culture par humectation.

(43) Date de publication de la demande :
**14.11.84 Bulletin 84/46**

(45) Mention de la délivrance du brevet :
**30.12.86 Bulletin 86/52**

(84) Etats contractants désignés :
**AT BE CH DE FR GB IT LI LU NL SE**

(56) Documents cités :
**EP-A- 0 078 730**
**FR-A- 2 507 438**
**US-A- 3 077 701**

(73) Titulaire : **TECNOMA**
**54, Rue Marcel Paul**
**F-51206 Epernay (FR)**

(72) Inventeur : **Ballu, Patrick**
**4, rue de Lisie**
**F-51100 Reims (FR)**

(74) Mandataire : **Loyer, Yves et al**
**CABINET PIERRE LOYER 18, rue de Mogador**
**F-75009 Paris (FR)**

Jouve, 18, rue St-Denis, 75001 Paris, France

## Description

L'invention concerne les appareils épandeurs de liquide herbicide.

Dans les dispositifs de traitement de cultures par humectation, on connaît des appareils comprenant au moins un réservoir tubulaire horizontal, autour duquel sont disposées les extrémités d'au moins une mèche ou surface souple et douée de propriétés capillaires et qui repose sur la végétation.

Le brevet US-A-3 077 701 décrit par exemple un tel dispositif : les mèches entourent partiellement le réservoir horizontal et sont alimentées par des ouvertures pratiquées le long dudit réservoir.

Un autre dispositif décrit au FR-A-2507 438 comprend un réservoir tubulaire horizontal à l'intérieur duquel sont glissées les extrémités d'un matériau possédant une structure capillaire.

La présente invention a pour objet certains perfectionnements aux appareils de ce type.

En effet, il s'avère que lorsque le liquide est envoyé dans le ou les tubes porte-mèche, du type décrit au FR-A-2 507 438, le débit est faible et le liquide se répartit de façon inégale sur les mèches, et que, en particulier, les parties des mèches situées en face des arrivées de liquide sont beaucoup mieux alimentées que les parties éloignées de ces arrivées, notamment les extrémités des tubes. De ce fait le résultat recherché n'est obtenu que très imparfaitement.

On a cherché à résoudre ce problème d'alimentation des mèches en proposant la solution décrite dans le document EP-A-78730 du demandeur, déposé le 22 octobre 1982, et publié le 11 mai 1983. Cette solution consiste à utiliser des pulvérisateurs externes disposés à proximité de l'extrémité emprisonnée des mèches à l'extérieur du tube. Mais si cette solution améliore la répartition de l'herbicide, elle présente le grave inconvénient de créer un brouillard susceptible de s'étendre au-delà du parcours des mèches et par suite d'atteindre les plantes à préserver.

La solution objet de la présente invention, consiste à alimenter les mèches par l'intérieur du ou des tubes en injectant le liquide herbicide dans le ou lesdits tubes non pas sous forme de gouttes ou de jet, mais sous forme de brouillard. Les essais effectués montrent que, par ce moyen, l'humectation des mèches est réellement uniforme bien que le débit global soit faible, les particules de liquide se répartissant à l'intérieur de tout le tube et atteignant les mèches soit directement soit par condensation sur les parois internes du tube et écoulement uniforme vers sa partie inférieure, et ce, sans que le liquide ne sorte du tube à l'état de brouillard c'est-à-dire sans risque de déposer du liquide en dehors du parcours des mèches.

Plus précisément l'invention a pour objet tout dispositif de traitement de culture par humectation comprenant au moins un réservoir tubulaire sensiblement horizontal à l'intérieur duquel sont emprisonnées les extrémités de au moins une mèche capillaire destinée à reposer sur la végétation par son autre extrémité, ledit réservoir étant alimenté en liquide de traitement sous pression, caractérisé en ce que l'alimentation du liquide de traitement est discontinue et que chaque arrivée de liquide sous pression dans un réservoir tubulaire est pourvue d'un orifice calibré formant pulvérisateur placé au voisinage du débouché de ladite arrivée dans ledit réservoir.

De préférence, les dispositions ci-après seront également adoptées :

a) Des orifices sont prévus et également répartis dans la zone inférieure de la paroi du tube, le long des mèches (ou en communication avec les mèches), pour assurer un écoulement régulier du liquide à travers la paroi du tube à l'encontre des effets du pincement des mèches dû aux opérations de mise en place de celles-ci, par exemple par surinjection.

b) Un clapet à bille est prévu en amont de chaque orifice calibré pour éviter le gouttage du liquide pendant les interruptions de pression.

La présence des orifices régulièrement répartis assure une meilleure chute de pression en aval des orifices calibrés qui améliore la pulvérisation à l'intérieur du tube et ces orifices assurent également le transfert du liquide hors du tube, le long des mèches, en dépit du pincement des mèches au droit des fentes.

Enfin, le clapet à bille interrompt l'alimentation des orifices calibrés dès que la pression tombe au-dessous d'une certaine valeur, de sorte que l'alimentation de l'intérieur des tubes est toujours une alimentation de brouillard malgré son caractère discontinu.

L'invention est illustrée par le dessin joint sur lequel on a représenté :

Figure 1 en coupe transversale, un réservoir tubulaire de dispositif de traitement perfectionné selon l'invention.

Figure 2 la coupe longitudinale du réservoir de la figure 1.

Figure 3 une variante de réservoir, en coupe longitudinale.

L'ensemble du dispositif de traitement pourra être réalisé selon la description et les dessins du brevet européen n° 82.4019475 déposé le 22 octobre 1982 et publié le 11 mai 1983 sous EP-A-0078730, au nom de la demanderesse, et sa représentation n'est donc pas nécessaire.

En se reportant aux figures annexées, on voit que le réservoir tubulaire 3 portant les mèches 1, alimenté sous pression et de façon discontinue en 5 comme décrit au brevet européen précité, comporte une pastille 6 à orifice calibré placée à l'arrivée du liquide dans le tube 3, pratiquement au voisinage de la paroi du tube.

De ce fait, le liquide herbicide pénètre à l'intérieur du réservoir 3 sous forme de brouillard ; ce brouillard reste enclos dans le tube et ne peut pas se répandre directement sur les végétaux, en particulier en dehors du parcours des mèches 1. Il se répand uniformément dans le réservoir 3, se dépose uniformément sur les extrémités internes 2 des mèches, mais aussi sur les parois internes du tube, et de là, il suinte par gravité vers les extrémités internes 2 qu'il imprègne uniformément pour être transféré par capillarité à la partie externe des mèches de façon uniformément répartie malgré un débit très faible.

De plus, conformément à une disposition préférée de l'invention, des orifices 10 sont prévus le long de la fente 4 et régulièrement répartis sur la longueur du tube, ce qui assure un meilleur passage du liquide malgré le pincement des mèches 1 par les lèvres de la fente 4, notamment lorsque l'ensemble est réalisé par surinjection de plastique sur les mèches et que les mèches se trouvent de ce fait, fortement comprimées dans la fente 4.

Dans l'exemple représenté, on a prévu un orifice 10 par mèche 1 mais il peut en être prévu davantage, notamment lorsqu'on emploie des mèches larges, ou même une nappe 1 unique.

Les orifices 10 sont de préférence pratiqués sur l'une et/ou l'autre des lèvres de la fente 4 et communiquent avec elle.

Cette disposition a en outre pour avantage d'assurer une pression constante pratiquement nulle dans le tube réservoir 3 ; la chute de pression entre l'arrivée 5 et l'intérieur du réservoir 3 assure le bon fonctionnement de l'orifice calibré 6 en tant qu'atomiseur ou pulvérisateur ; le brouillard obtenu reste cependant enclos dans le tube 3 et ne peut humecter que les mèches 1.

Immédiatement, en amont de l'orifice calibré 6, on peut prévoir un clapet à bille 7 contretenu par un ressort calibré 9 contre le siège 8 ou l'équivalent.

Dès que la pression tombe au-dessous d'une valeur prédéterminée, soit à l'arrêt de l'appareil, soit pendant les interruptions de l'alimentation sous pression discontinue, la bille retombe sur son siège et le liquide alimenté 5 ne peut goutter dans le tube 3, qui est alimenté uniquement sous forme d'un brouillard assurant une humectation uniforme de l'extrémité 2 des mèches qui émerge ou affleure dans le tube. Cette disposition n'est toutefois pas nécessaire lorsque le ou les orifices 6 sont suffisamment petits pour retenir le liquide en l'absence de pression.

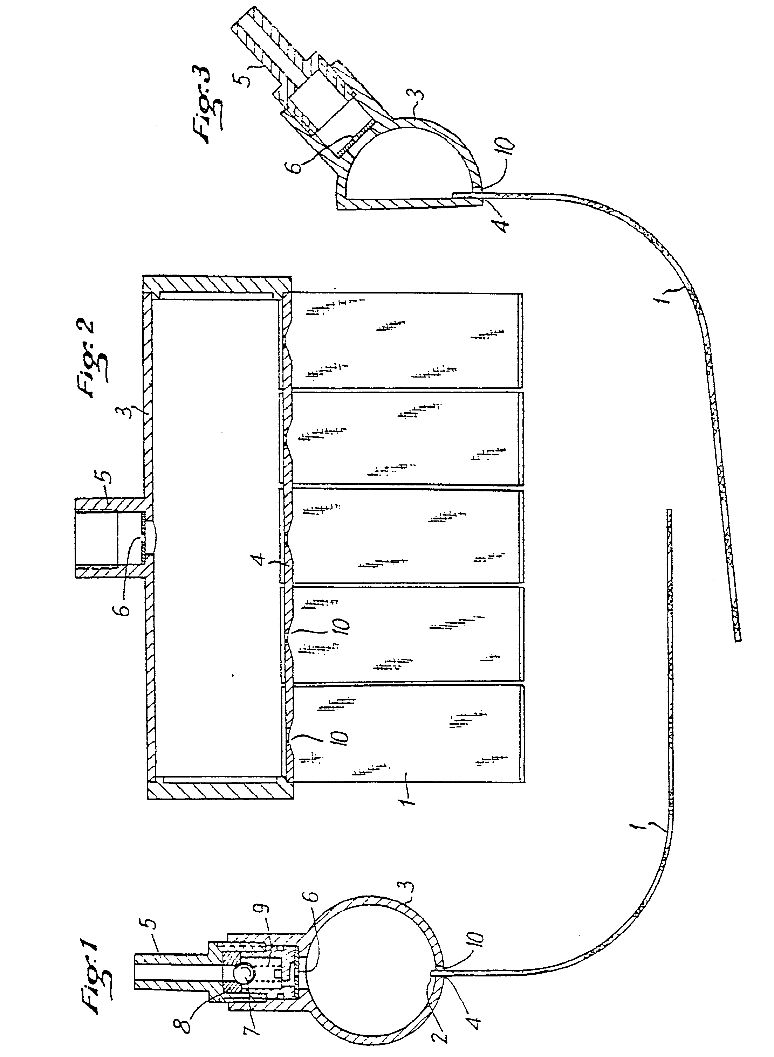

La section du réservoir tubulaire 3 est circulaire sur la figure 1. Elle peut recevoir toutes autres formes notamment la forme demi-circulaire représentée à la figure 3, l'extrémité 2 de la ou des mèches 1 pénétrant le long de la face plane du réservoir. Il importe néanmoins que la fente 4 ainsi que les perforations 10 soient situées dans la zone inférieure de l'espace interne du réservoir 3 pour assurer l'écoulement du liquide par gravité, et que les perforations 10 viennent en contact avec la ou les mèches 1.

Dans l'exemple de la figure 2, les mèches 1 forment une nappe d'humectation par leur disposition côte à côte. Mais, surtout lorsque le réservoir 3 n'est as de grande longueur, on peut utiliser une seule mèche par réservoir 3, la mèche occupant approximativement la longueur du réservoir et formant nappe. On peut également employer des mèches de section différente, et non contiguës.

Un dispositif de traitement conforme à l'invention comprend un ou plusieurs réservoirs tubulaires 3 montés de façon connue et notamment en appareil manuel ou tracté comme décrit dans le brevet européen précité, l'alimentation discontinue de la ou des arrivées 5 étant obtenue par tous moyens mécaniques, électromécaniques ou électroniques.

Selon une variante de réalisation de la présente invention, le dispositif est formé d'au moins un réservoir 3 monté, à l'extrémité de la lance à main d'un appareil pulvérisateur portable à pression entretenue ou à réservoir sous pression préalable, comportant une gâchette de commande.

De tels appareils sont largement répandus dans le public et ne nécessitent pas de description particulière (cf. notamment FR-A-1.494.165 et FR-A-2.285.069 et l'appareil vendu dans le commerce sous la dénomination Tecnoma T 16P).

L'actionnement discontinu au coup par coup de la gâchette de commande par l'opérateur, provoque l'alimentation sous pression et discontinue du réservoir 3 qui peut alors remplir son office conformément à la description ci-dessus.

Lorsque la disposition des perforations 10 est adoptée, il n'est pas indispensable que l'extrémité 2 d'une mèche 1 pénètre substantiellement dans l'intérieur du réservoir 3 et cette extrémité de mèche peut sans inconvénient se trouver emprisonnée dans la paroi du réservoir, les perforations 10, en contact avec lesdites mèches, assurant leur alimentation en liquide herbicide.

**Revendications**

1. Dispositif de traitement de culture par humectation comprenant au moins un réservoir tubulaire (3) sensiblement horizontal en cours d'emploi à l'intérieur duquel sont emprisonnées les extrémités d'au moins une mèche (1) capillaire destinée à reposer sur la végétation par son autre extrémité, ledit réservoir étant alimenté en liquide de traitement sous pression, caractérisé en ce que l'alimentation du liquide de traitement est discontinue et que chaque arrivée de liquide sous pression (5) dans un réservoir tubulaire (3) est pourvue d'un orifice calibré (6) formant pulvérisateur, placé au voisinage du débouché de ladite arrivée (5) dans ledit réservoir (3).

2. Dispositif de traitement selon la revendication 1, caractérisé en ce que des orifices également répartis sont prévus dans la zone inférieure de la paroi du réservoir (3) et en communication avec la ou les mèches (1).

3. Dispositif de traitement selon l'une quelconque des revendications précédentes, caractérisé en ce qu'en amont de chaque orifice calibré (6), un clapet à bille (7) est prévu sur chaque arrivée (5).

4. Dispositif de traitement selon l'une quelconque des revendications précédentes, caractérisé en ce qu'au moins un réservoir (3) est monté à l'extrémité de la lance à main d'un appareil pulvérisateur portable à pression et à gâchette de commande.

5. Dispositif de traitement selon l'une quelconque des revendications 1 à 3, caractérisé en ce qu'au moins un réservoir (3) est porté sur un bras fixe ou mobile monté sur une structure tractée comportant un réservoir, une pompe de mises sous pression et un distributeur discontinu à commande mécanique, électromécanique et électronique.

## Claims

1. A device for treating crops by moistening comprising a tubular tank (3) substantially horizontal during use within which are gripped the ends of at least one capillary wick (1) designed for resting on the vegetation by its other end, said tank being supplied with pressurized treating liquid, characterized in that the treating liquid feed is intermittent and that each inlet member (5) through which pressurized liquid is fed into a tubular tank (3) is provided with a calibrated orifice (6) forming a sprayer, located in the vicinity of the outlet of said inlet member (5) into said tank (3).

2. A treating device according to claim 1, characterized in that evenly distributed orifices are provided in the lower zone of the tank wall (3) and are in communication with the wick or wicks (1).

3. A treating device according to any of the above claims, characterized in that a retaining ball valve (7) is provided on each feed inlet (5) upstream of each calibrated orifice (6).

4. A treating device according to any of the above claims, characterized in that at least one tank (3) is mounted on the end of the hand-held lance of a portable pressure sprayer provided with a trigger control.

5. A treating device according to any one of claims 1 to 3, characterized in that at least one tank (3) is carried on a fixed or mobile arm mounted on a tractor-drawn structure comprising a tank, a pressurizing pump and an intermittent distributor with a mechanical, electromechanical or electronic drive.

## Patentansprüche

1. Benetzungsvorrichtung zur Unkrautbekämpfung mit mit mindestens einem während des Gebrauchs waagrecht angeordneten rohrförmigen Behälter (3), in dem die Enden von zumindest einer Kapillardochtschnur (1) stecken, während das andere Ende auf den Pflanzen aufliegt, wobei der Behälter mit einem unter Druck stehenden Unkrautbekämpfungsmittel gespeist wird, dadurch gekennzeichnet, daß die Versorgung mit der Unkrautbekämpfungsflüssigkeit diskontinuierlich erfolgt und jede Druckflüssigkeitszuleitung (5) in den rohrförmigen Behälter (3) eine kalibrierte Öffnung (6) in Form eines Zerstäubers in der Nähe der Einmündung der Zuleitung (5) in den Behälter (3) aufweist.

2. Unkrautbekämpfungsvorrichtung nach Anspruch 1, dadurch gekennzeichnet, daß die gleichmäßig verteilten Öffnungen im unteren Bereich der Behälterwand (3) liegen und mit der oder den Dochtschnüren (1) in Verbindung stehen.

3. Unkrautbekämpfungsvorrichtung nach Anspruch 1 und 2, dadurch gekennzeichnet, daß vor jeder kalibrierten Öffnung (6) ein Kugelventil (7) in jeder Zuleitung (5) angeordnet ist.

4. Unkrautbekämpfungsvorrichtung nach Anspruch 1-3, dadurch gekennzeichnet, daß zumindest ein Behälter (3) am Ende der Handspritzlanze einer tragbaren Druckspritze mit Drückerbetätigung befestigt ist.

5. Unkrautbekämpfungsvorrichtung nach Anspruch 1-3, dadurch gekennzeichnet, daß zumindest ein Behälter (3) auf einem fest bzw. beweglichen Ausleger eines Schleppanhängergestells mit einem Behälter, einer Druckpumpe und einem diskontinuierlichen, mechanisch, elektromechanisch oder elektronisch gesteuerten Verteiler befestigt ist.

*Fig:1*

*Fig:2*

*Fig:3*

0 124 672